# EUROPEAN PATENT APPLICATION

(11) **EP 3 939 821 A1**
(43) Date of publication of application: **19.01.2022**
(21) Application number: 20382646.6
(22) Date of filing: 17.07.2020
(51) Int. Cl.: B60L 50/64, B60L 50/60, B62M 6/40, B62M 6/90

(54) **BATTERY SET FOR ELECTRIC MOTORCYCLES**

(71) Applicant: Win Life Electric Vehicles, S.L., 08021 Barcelona (ES)
(72) Inventor: LOSANTOS SISTACH, Josep, 08021 Barcelona (ES)
(74) Representative: Herrero & Asociados, S.L.

(57) **Abstract**

The battery set (1) for electric motorcycles comprises: a plurality of battery modules (4), wherein said battery modules (4) are placed in at least: a main block (2), and two side blocks (3), defining the main block (2) and the side blocks (3) a gap (5).

It allows optimizing the arrangement of the battery assembly in a motorcycle, so that the volume normally used in the combustion engine and the exhaust in conventional motorcycles is used.

## Description

The present invention relates to a battery set for electric motorcycles.

### Background of the invention

Vehicles traditionally comprise internal combustion engines for operation.

However, due to the contamination generated by these types of motors, the use of electric or hybrid vehicles is becoming more common.

One of the problems of electric vehicles is their limited autonomy due to the capacity of their batteries.

The batteries of electric vehicles form sets of battery modules connected to each other, and have the drawback of their volume and weight.

These battery sets usually have a square or rectangular box shape.

In the case of motorcycles, these drawbacks are even greater, since the space available to place these battery sets in the form of a square or rectangular plan box is limited, so that the autonomy of electric motorcycles is very limited.

Furthermore, depending on the position where this battery set is placed, it can affect the center of gravity of the motorcycle, with the consequent increase in the risk of accidents due to its stability.

### Disclosure of the invention

Therefore, an objective of the present invention is to provide a battery set that optimizes its placement on a motorcycle.

With the battery set of the invention said disadvantages are solved, presenting other advantages that will be described below.

The battery set for electric motorcycles according to the present invention comprises:
- a plurality of battery modules,
wherein
said battery modules are arranged in at least:
- a main block, and
- two side blocks,
said main block and said lateral blocks defining a gap.

Thanks to this feature, the arrangement of the battery set in a motorcycle is optimized, so that the volume that normally occupies the combustion engine and the exhaust in conventional motorcycles is used.

Said gap defined by the main block and the side blocks allows the positioning of the rear wheel of the motorcycle between the side blocks.

According to a preferred embodiment, said main and lateral blocks define a U-shaped plan.

Preferably, the battery modules in each side block are positioned in a plurality of columns and one row, such that each side block is elongated in shape, allowing it to be positioned extending along the rear wheel of the motorcycle.

Preferably, the battery modules in the main block are positioned forming a plurality of columns and a plurality of rows, so that the main block has square or rectangular plan, being able to be placed in front of the rear wheel of the motorcycle.

Furthermore, said battery modules can also be arranged in transition blocks placed between the main block and each side block, and each transition block being preferably placed diagonally between the main block and a side block.

### Brief description of the drawings

For better understanding of what has been disclosed, some drawings in which, schematically and only by way of a non-limiting example, a practical case of embodiment is shown.
Figure 1 is a perspective view of the battery set according to the present invention;
Figure 2 is a perspective view of the battery set according to the present invention in longitudinal section, where the battery modules can be seen; and
Figure 3 is a schematic side elevation view of a motorcycle incorporating the battery set according to the present invention.

### Description of a preferred embodiment

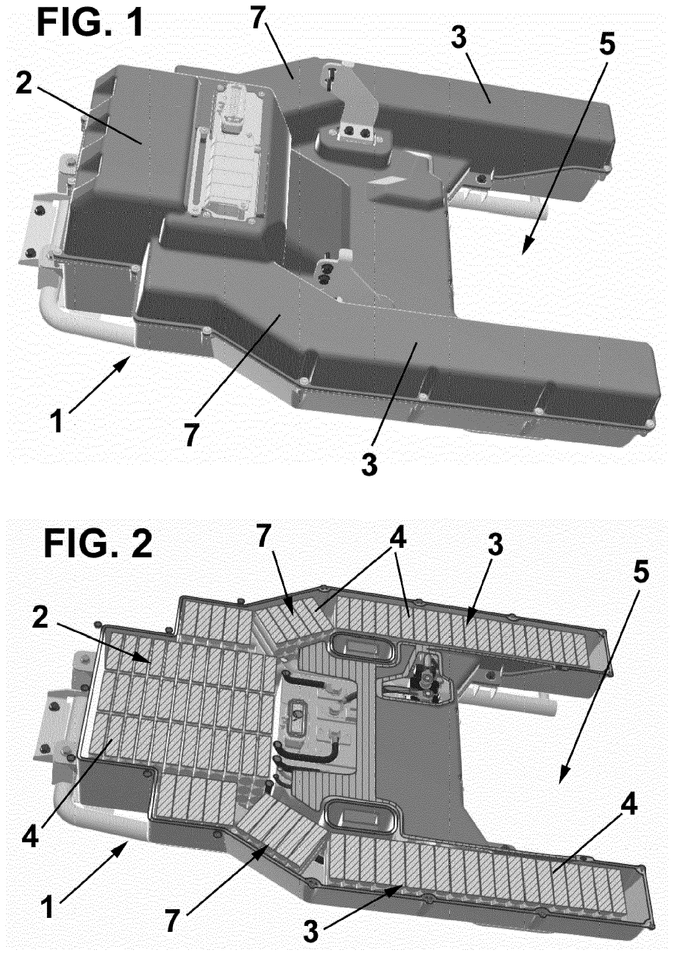

As shown in Figures 1 and 2, the battery set according to the present invention, generally identified by reference number 1, is divided into different blocks, in particular into a main block 2 and two side blocks 3.

Each of these blocks 2, 3 comprises within it a plurality of battery modules 4, which are those that provide electricity to an electric motorcycle.

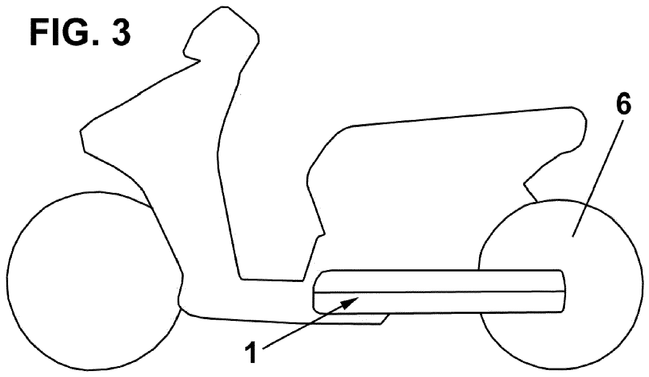

The main block 2 and the side blocks 3 are placed with each other defining a gap 5, in which a wheel 6 of a motorcycle is placed, in particular a rear wheel 6, as can be seen in figure 3.

That is, the main block 3 and the side blocks 3 define, in a plan view, a U-shape, which allows the battery set 1 to be placed with the side blocks 3 next to the rear wheel 6 of the motorcycle and the block main 2 in front of said rear wheel 6 of the motorcycle.

As can be seen in figure 2, the battery modules 4 are arranged in a plurality of rows and columns in the main block 2, while they are arranged in a single row and a plurality of columns in the side blocks 3.

This allows the proper configuration of each block. Specifically, a square or rectangular configuration for the main block 2 and an elongated configuration for the side blocks 3.

As can also be seen in figures 1 and 2, between the main 2 and side 3 blocks there are transition blocks 7, placed diagonally between the main block 2 and each side block 3.

Furthermore, as can be seen in figure 3, the battery assembly according to the present invention is placed in a lower position of the motorcycle, so that its weight favorably affects the lowering of the center of gravity of the motorcycle as a whole.

Although reference has been made to specific embodiments of the invention, it is apparent to a person skilled in the art that the described battery set is susceptible of numerous variations and modifications, and that all the details mentioned can be replaced by other technically equivalents, without departing from the scope of protection defined by the appended claims.

## Claims

1. Battery set (1) for electric motorcycles, comprising:
- a plurality of battery modules (4),
**characterized in that**
said battery modules (4) are placed in at least:
- a main block (2), and
- two side blocks (3),
defining the main block (2) and the side blocks (3) a gap (5).

2. Battery set for electric motorcycles according to claim 1, wherein the main block (2) and the side blocks (3) define a U-shaped plan.

3. Battery set for electric motorcycles according to claim 1 or 2, wherein the side blocks (3) have an elongated shape.

4. Battery set for electric motorcycles according to claim 1 or 3, wherein the battery modules (4) in each side block (3) are positioned forming a plurality of columns and one row.

5. Battery set for electric motorcycles according to claim 1 or 2, in which the main block (2) has a plan square or rectangular shape.

6. Battery set for electric motorcycles according to claim 1 or 5, wherein the battery modules (4) in the main block (2) are positioned forming a plurality of columns and a plurality of rows.

7. Battery set for electric motorcycles according to any one of the previous claims, wherein said battery modules (4) are also placed in transition blocks (7) placed between the main block (2) and each side block (3).

8. Battery set for electric motorcycles according to claim 7, wherein each transition block (7) is placed diagonally between the main block (2) and a side block (3).
